# EUROPÄISCHE PATENTANMELDUNG

(11) **EP 2 835 756 A1**
(43) Veröffentlichungstag der Anmeldung: **11.02.2015**
(21) Anmeldenummer: 13179636.9
(22) Anmeldetag: 07.08.2013
(51) Int. Cl.: G06F 21/34

(54) **Speicherkommunikationssystem**

(71) Anmelder: SSP Europe GmbH, 80539 München (DE)
(72) Erfinder: Steiner, Dieter Dr., 93053 Regensburg (DE); Haberl, Thomas, 93053 Regensburg (DE)
(74) Vertreter: Hannke, Christian

(57) **Zusammenfassung**

Die Erfindung betrifft ein Speicherkommunikationssystem zum Speichern und/oder Steuern und/oder Abrufen von zumindest einem auf zumindest einem Cloud-Speicher hinterlegten oder einzuspeichernden Dateninhalt, wobei der Dateninhalt zumindest teilweise Providerinformationen umfasst, wobei das Speicherkommunikationssystem zumindest ein tragbares, passives Aktivierungselement zum Aktivieren eines Zugangs zu dem Dateninhalt und/oder zumindest einem Datenspeicher des Cloud-Speichers über zumindest eine Bedienerschnittstelle umfasst, und wobei über die Bedienerschnittstelle die Dateninhalte abrufbar sind.

## Beschreibung

Die vorliegende Erfindung betrifft ein Speicherkommunikationssystem zum Speichern und/oder Steuern und/oder Abrufen von zumindest einem auf zumindest einem Cloud-Speicher hinterlegten oder einzuspeichernden Dateninhalt sowie ein dazu korrespondierendes Verfahren zum Betreiben eines Speicherkommunikationssystems gemäß den jeweiligen Oberbegriffen der Patentansprüche 1 und 9.

Derartige Speicherkommunikationssysteme, insbesondere umfassend zumindest einen Cloud-Speicher, sind aus dem Stand der Technik bereits wohl bekannt. Diese Cloud-Speicher stehen für eine Speicherung und eine zentrale Zusammenfassung aller möglichen Cloud-Dienste. Dabei kann es sich um Rechendienste, Transaktionen, Dokumentenverarbeitung, Datenbankanwendungen, E-Mail-Services oder Security-Aufgaben handeln. Der Anwender kann die zentralen Dienste jederzeit beispielsweise von jedem Ort aus nutzen.

Allgemein werden beim Cloud-Computing verschiedene Kategorien von "Clouds" unterschieden. Zum einen ist eine "Public Cloud" zu nennen, welche sogenannte Public Cloud-Dienste von verschiedenen Dienstanbietern als "Anything-as-a-service (Xaas)" angeboten werden. Bei unternehmensspezifischen Anwendungen gibt es die Private Clouds, in den die Unternehmensdaten und Dienste mit höherer Sicherheit verwaltet werden können. In hybriden Konstellationen, den Hybrid Clouds, können die Cloud-Dienste beider Clouds miteinander kombiniert werden und in hybdriden Clouds, die Hybrid-Clouds, schließen sich Unternehmen und Organisationen beispielsweise der gleichen Branche zusammen und bilden aus ihren Private Clouds die Community Clouds.

Der Ansatz des Cloud-Computing umfasst nicht nur die Hardware mit ihren Servern und Speichernetzen, die einem oder mehreren Anbietern bereitgestellt und von vielen Anwendern genutzt werden, sondern auch die Software- Anwendungen, die der Anwender nicht nur selbst ausführt, sondern ebenfalls von einem Service-Provider ausführen lassen kann.

Insbesondere sei im Folgenden bei dem Begriff "Cloud" eine "Private Cloud" bezeichnet, welche nur eingeschränkten Zugang zu einer vorgebbaren Benutzer-Community ermöglicht.

Derartige Cloud-Systeme sind jedoch oftmals nicht nur kostenintensiv, um gewisse Speicherinhalte hinzubuchen zu können oder ein Speicherabonnement verlängern zu können, sondern eine Verifikation in einer derartigen Private Cloud ist mitunter sehr aufwendig. Oftmals muss zur Personenidentifikation in aufwendiger Art und Weise der Benutzer beispielsweise über eine Kopie des Personalausweises zeitaufwendig verifiziert werden.

Es ist daher eine Aufgabe der vorliegenden Erfindung, ein Speicherkommunikationssystem anzugeben, mittels dessen auf besonders kostengünstige Art und Weise sowie überraschend einfach ein Zugang und eine Aktivierung zu einem Cloud-Speicher ermöglicht und kontrollierbar ist.

Diese Aufgabe wird durch den Gegenstand des geltenden Patentanspruches 1 gelöst. Vorteilhafte Ausgestaltungen sind in den Unteransprüchen beschrieben.

Um nun ein Speicherkommunikationssystem zum Speichern und/oder Steuern und/oder Abrufen von zumindest einem auf zumindest einem Cloud-Speicher hinterlegten oder einzuspeichernden Dateninhalt anzugeben, welcher sowohl kostengünstig, insbesondere kostenfrei, ist, als auch Verifikationsmaßnahmen für eine Zugangsgenehmigung zu dem Cloud-Speicher besonders einfach zu gestalten, macht die vorliegende Erfindung unter anderem von der Idee Gebrauch, zumindest ein tragbares, passives Aktivierungselement zum Aktivieren eines Zugangs zu dem Dateninhalt und/oder zumindest einem Datenspeicher des Cloud-Speichers über zumindest eine Benutzerschnittstelle zu ermöglichen, wobei über die Bedienerschnittstelle die Dateninhalte abrufbar sind.

Dabei heißt "tragbar", dass das Aktivierungselement insbesondere dazu vorgesehen ist, mobil angewandt zu werden, d.h. dass das Aktivierungselement von dem Bediener auch dazu vorgesehen und dazu eingerichtet ist, nicht statisch, beispielsweise an einem festen Arbeitsplatz installiert zu werden, sondern im Gegensatz dazu beispielsweise herumgetragen werden kann.

"Passiv" heißt in diesem Zusammenhang, dass das Aktivierungselement an sich nicht der Lage ist, von selbst eine Verbindung zu dem Datenspeicher des Cloud-Speichers herstellen zu können. Mit anderen Worten ist eine Verbindung zu dem Cloud-Speicher ausschließlich über die Kombination aus dem Aktivierungselement und der Bedienerschnittstelle, welche vorliegend den aktiven Part übernimmt, herstellbar. Insbesondere kann es sich bei der Bedienerschnittstelle um ein Mobiltelefon (zu Englisch: Smartphone), einen Tablet-PC oder um ein Notebook sowie einen Personalcomputer handeln.

"Providerinformationen" sind Informationen des Anbieters und/oder des Betreibers des Cloud-Speichers der Dateninhalte, welche auf dem Cloud-Speicher hinterlegt sind. Insbesondere kann es sich bei den Providerinformationen um Inhalte technischer Natur, wie zum Beispiel die Speicherbelegung des Cloud-Speichers oder sonstige technische Variablen des gesamten Speicherkommunikationssystems handeln.

Zusätzlich oder alternativ können die Provider-Informationen auch Informationen über die jeweiligen Provider selbst beispielsweise in Form von Werbebotschaften oder einem Firmenbranding umfassen.

Insofern ist mittels des hier beanspruchten tragbaren, passiven Aktivierungselements in Verbindung mit der hier beanspruchten Bedienerschnittstelle in besonders einfacher und kostengünstiger Art und Weise eine Aktivierung, d.h. Zugänglichmachung eines Dateninhalts eines Cloud-Speichers ermöglicht. Mit anderen Worten beseitigt das hier beschriebene Speicherkommunikationssystem die mitunter im Stand der Technik auftretenden Nachteile, wonach der Zugriff auf den Cloud-Speicher nicht nur kostenintensiv ist, sondern auch aufwendig bezüglich der Aktivierungsmaßnahmen ausgestaltet ist.

Gemäß zumindest einer Ausführungsform dient das Speicherkommunikationssystem zum Speichern und/oder Steuern und/oder Abrufen von zumindest einem auf zumindest einem Cloud-Speicher hinterlegten oder einzuspeichernden Dateninhalt, wobei der Dateninhalt zumindest teilweise Provider-Informationen umfasst. Insbesondere kann das Speicherkommunikationssystem diesen Dateninhalt umfassen. Dabei umfasst das Speicherkommunikationssystem weiter zumindest ein tragbares, passives Aktivierungselement zum Aktivieren eines Zugangs zu dem Dateninhalt und/oder zumindest einem Datenspeicher des Cloud-Speichers über zumindest eine Bedienerschnittstelle, und wobei über die Bedienerschnittstelle die Dateninhalte abrufbar sind.

Gemäß zumindest einer Ausführungsform ist die Aktivierung des Zugangs auf den Dateninhalt und/oder zumindest einen Datenspeicher des Cloud-Speichers zeitlich vorgebbar und zeitlich begrenzt. Mit anderen Worten kann in einfacher Art und Weise die Zeit und die Nutzungsdauer des Cloud-Speichers über das tragbare, passive Aktivierungselement von dem Provider gesteuert und auch beispielsweise kontrolliert werden. Dies verhindert zudem auch eine technisch unerwünschte Speicherüberlastung, da nur einer vorgebbaren Anzahl von tragbaren, passiven Aktivierungselementen einer Vielzahl von Nutzern zur Verfügung steht. Mit anderen Worten kann über das tragbare, passive Aktivierungselement und dessen Anzahl ebenso eine Anzahl sowie eine Benutzerfrequenz zeitlich vorgebbar eingestellt werden.

Gemäß zumindest einer Ausführungsform umfasst das Aktivierungselement zumindest einen Aktivierungscode und/oder zumindest einen Aktivierungschip, der dazu eingerichtet und dazu vorgesehen ist, eine internetfähige Verbindung über die Bedienerschnittstelle zu dem Cloud-Speicher herzustellen und/oder freizuschalten. Denkbar ist, dass die Verbindung über ein Zugangsgerät der Bedienerschnittstelle zum Cloud-Speicher hergestellt wird. Das Zugangsgerät kann dabei ein Teil der Bedienerschnittstelle oder separat von diesem ausgebildet sein. Insbesondere kann es sich bei dem Aktivierungscode um eine Zahlen- und/oder Buchstabenfolge und/oder einen Barcode handeln, welche/r von der Bedienerschnittstelle eingelesen und/oder in die Bedienerschnittstelle beispielsweise händisch von dem Bediener eingegeben werden kann. Denkbar ist in diesem Zusammenhang, dass nach Eingabe des Aktivierungscodes in die Bedienerschnittstelle ausgehend von der Bedienerschnittstelle diese eine Freigabeanfrage an den Cloud-Speicher sendet, wobei der Aktivierungscode in dem Cloud-Speicher hinterlegt ist. Stimmen der Aktivierungscode, welcher in die Bedienerschnittstelle eingegeben wurde, sowie der bereits in dem Cloud-Speicher hinterlegte Aktivierungscode miteinander überein, so schaltet der Cloud-Speicher einen Zugang zwischen der Bedienerschnittstelle und den auf dem Cloud-Speicher hinterlegten Dateninhalten frei.

Umfasst das Aktivierungselement einen Aktivierungschip, insbesondere einen passiven Aktivierungschip, ist denkbar, dass dieser Chip in Form eines RFID-Chips und/oder in Form eines NFC-Chips ausgeführt ist. Denkbar ist dazu, dass das Aktivierungselement an einem Detektor der Bedienerschnittstelle vorbeigeführt wird. Dabei kann es sich bei dem Detektor um einen Chip und/oder Codescanner handeln, welcher beispielsweise einen auf dem Aktivierungschip hinterlegten Aktivierungscode einliest. Eine derartige Ausführung des Aktivierungselementes in Form des Aktivierungschips kann daher eine beispielsweise händische Eingabe eines Aktivierungscodes in die Bedienerschnittstelle ersetzen, was zu einem erheblichen Zeitvorteil in Bezug auf eine Zeitdauer bis zur Aktivierung und zur Zugangsgenehmigung zu dem Cloud-Speicher sichert.

Gemäß zumindest einer Ausführungsform ist das Aktivierungselement in Form einer Kunststoffkarte oder eines Schreibstiftes ausgestaltet, wobei auf zumindest einer Außenfläche der Kunststoffkarte oder des Schreibstiftes der zumindest eine Aktivierungscode und/oder Aktivierungschip angeordnet und befestigt ist. Insofern kann das Aktivierungselement in Form eines (täglichen) Gebrauchsgegenstandes ausgeführt sein. Ist das Aktivierungselement beispielweise in Form einer Kunststoffkarte ausgeführt kann diese besonders einfach in einer Handtasche oder einer Geldbörse verstaut werden. Gemäß zumindest einer Ausführungsform sind nach Aktivierung des Zugangs auf den Dateninhalt und/oder zumindest einen Datenspeicher des Cloud-Speichers zumindest zwei Benutzerschnittstellen in denselben Zugang einloggbar, wobei die beiden Benutzerschnittstellen zeitgleich oder zeitversetzt zueinander Zugriff auf den Dateninhalt und/oder auf zumindest einen Datenspeicher des Cloud-Speichers haben. Die eingeloggten Benutzer können dabei untereinander die Daten austauschen oder herunterladen. Zudem ist vorstellbar, dass mittels ein und derselben Aktivierungselements beispielsweise entsprechend der Kategorie des Aktivierungscodes eine vorgebbare Anzahl von Benutzern den von dem Aktivierungselement aktivierten und freigeschalteten Zugang zu dem Cloud-Speicher beispielsweise zeitgleich nutzen können.

Beispielsweise kann eine erste Art von Aktivierungscodes oder eine erste Art eines Aktivierungselementes ein solches Aktivierungselement sein, welches beispielsweise über eine Laufzeit von 1 Monat 5 Benutzern pro Aktivierungskarte ein Daten- und/oder Speichervolumen innerhalb des Cloud-Speichers von bis zu 2 GB zugesteht. Insofern bezeichnet der Begriff "Art" die Größe des freigeschalteten und den Benutzern insgesamt zustehenden Speicherplatzes.

Eine Übersicht über lediglich exemplarisch und beispielhaft aufgeführte Kombinationen von Aktivierungselementen verschiedener Arten ist in den beispielhaft dargestellten Tabellen 1 und 2 dargelegt. Vorstellbar ist daher, wie in den Tabellen 1 und 2 dargestellt, ein Aktivierungselement mit dem Namen "Aktivierungselement 2 GB" sowie Aktivierungselement der Art "Aktivierungselement 5 GB".

**Tabelle 1**

| Aktivierungselement, 2 GB | | |
|---|---|---|
| **5 User pro Karte** | **2 GB** | **1 Monat Laufzeit** |
| **5 User pro Karte** | **2 GB** | **3 monate Laufzeit** |
| **5 User pro Karte** | **2 GB** | **6 Monate Laufzeit** |
| **5 User pro Karte** | **2 GB** | **12 Monate Laufzeit** |

**Tabelle 2**

| Aktivierungselement, 5 GB | | |
|---|---|---|
| **5 User pro Karte** | **5 GB** | **1 Monat Laufzeit** |
| **5 User pro Karte** | **5 GB** | **3 Monate Laufzeit** |
| **5 User pro Karte** | **5 GB** | **6 Monate Laufzeit** |
| **5 User pro Karte** | **5 GB** | **12 Monate Laufzeit** |

Gemäß zumindest einer Ausführungsform sind über ein Kommunikationsnetzwerk die Dateninhalte und/oder zumindest ein Datenspeicher zwischen zumindest zwei Bedienerschnittstellen transportierbar. Insofern kann vorteilhaft erreicht werden, dass nicht nur die zwei Bedienerschnittstellen über ein Kommunikationsnetzwerk mit dem Cloud-Speicher verbunden sind, sondern zusätzlich auch die einzelnen Bedienerschnittstellen untereinander in Kommunikation miteinander stehen. Insofern wird ein ganz besonders variables und besonders gut aufeinander abgestimmtes Speicherkommunikationssystem bereitgestellt.

Gemäß zumindest einer Ausführungsform umfasst der Cloud-Speicher ein operatives Untersystem und ein Datenauswertungs-Untersystem, wobei das operative Datensystem Daten gespeichert hält, und wobei das Datenauswertungs-Untersystem Transaktions(einzel)daten gespeichert hält. Insbesondere kann das operative Untersystem operative Daten in Form von Datenbanken oder sonstigen Dateninhalten bereithalten, nicht jedoch detaillierte Transaktions(einzel)daten. Hingegen hält das Datenauswertungs-Untersystem die detaillierten Transaktions(einzel)daten, wie zum Beispiel Zugangsdaten und Informationen über den Benutzer, beispielsweise in verschlüsselter Form gespeichert. "Transaktion" bezeichnet in diesem Zusammenhang auch Eigenschaften (Bit-Zahl, Datenvolumen) einer Übertragung und/oder Speicherung eines Datenvolumens in der Datenbank und damit auf dem Cloud-Speicher.

Gemäß zumindest einer Ausführungsform umfasst das Speicherkommunikationssystem zumindest ein Webseitenanzeigeelement, welches in Internet-Kommunikation mit dem Cloud-Speicher steht, wobei über das Webseitenanzeigeelement kontinuierlich oder in zeitlichen vorgebbaren Zeitintervallen die Providerinformationen, beispielsweise Werbeinhalte des Providers, abgefragt und dargestellt werden können. Bei dem Webseitenanzeigeelement kann es sich um einen auf einem Computer abspielbares und/oder auf einen Computer herunterladbares und/oder zumindest anzeigbares internetfähiges Programm handeln. Zusätzlich kann das Webseitenanzeigenelement einen solchen Computer umfassen auf dem ein solches Programm abspielbar ist. Dieses Programm kann dann nach Art der Programmiersprachen und/oder Darstellungssprachen HTML/JS/CSS oder Windows ausgeführt sein und/oder betrieben werden. Insofern ist auch ein möglichst homogenes Providerabhängiges Look-And-Feel Gefühl ermöglicht.

Es wird darüber hinaus ein Verfahren zum Betreiben eines Speicherkommunikationsmediums zum Speichern und/oder Steuern und/oder Abrufen von zumindest einem auf zumindest einem Cloud-Speicher hinterlegten und einzuspeichernden Dateninhalt angegeben. Insbesondere kann es sich bei dem Speicherkommunikationssystem um ein solches Speicherkommunikationssystem handeln, wie es in einer oder mehreren der oben genannten Ausführungsformen beschrieben ist. Das heißt die für das obig beschriebene Speicherkommunikationssystem offenbarten Merkmale sind auch für das hier beschriebene Verfahren offenbart und umgekehrt.

Gemäß zumindest einer Ausführungsform umfasst das Verfahren zum Betreiben eines Speicherkommunikationssystems zumindest ein tragbares, passives Aktivierungselement zum Aktivieren eines Zugangs zu Dateninhalten und/oder zumindest einem Datenspeicher des Cloud-Speichers über zumindest eine Bedienerschnittstelle, und wobei über die Bedienerschnittstelle die Dateninhalte abgerufen werden.

Hierbei weist das Verfahren die gleichen vorteilhaften Ausgestaltungen sowie Vorteile wie im Zusammenhang mit dem oben beschriebenen Speicherkommunikationssystem auf.

Im Folgenden werden das hier beschriebene Speicherkommunikationssystem sowie das hier beschriebene Verfahren anhand eines Ausführungsbeispiels und den dazugehörigen Figuren näher erläutert.

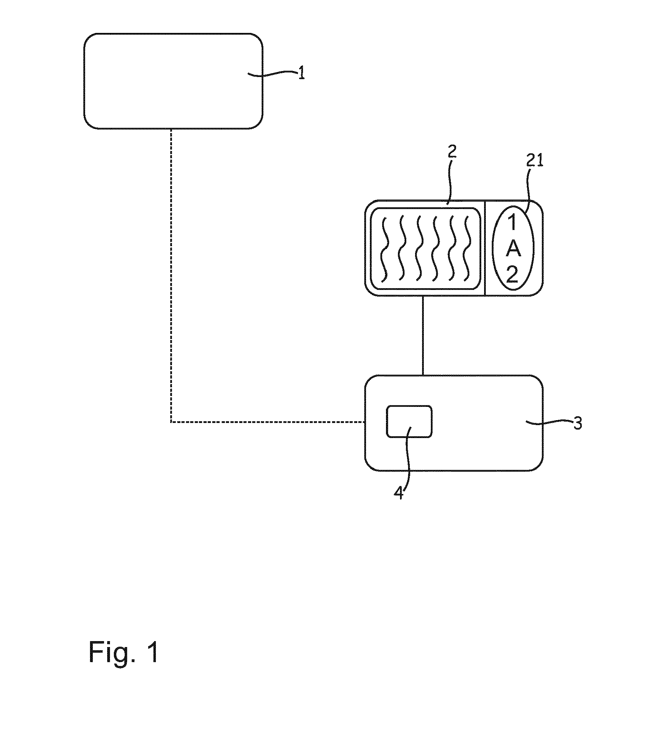

Die Figur 1 zeigt in einer schematischen Ansicht ein Ausführungsbeispiel eines hier beschriebenen Speicherkommunikationssystems, welches mit einem Ausführungsbeispiel eines hier beschriebenen Verfahrens betrieben wird.

In den Ausführungsbeispielen und der Figur sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

In der Figur 1 ist in einer schematischen Draufsicht ein hier beschriebenes Speicherkommunikationssystem 100 zum Speichern, Steuern und Abrufen von zumindest einem auf zumindest einem Cloud-Speicher 1 hinterlegten oder einzuspeichernden Dateninhalt gezeigt, wobei der Dateninhalt zumindest teilweise Provider-Informationen umfasst. Dabei ist aus der Figur 1 erkennbar, dass das Speicherkommunikationssystem 100 zudem ein tragbares, passives Aktivierungselement 2 zum Aktivieren eines Zugangs zu dem Dateninhalt und/oder zumindest einem Datenspeicher des Cloud-Speichers 1 über zumindest eine Bediener-Schnittstelle 3 aufweist. Insbesondere sei ausgeführt, dass über die Bedienerschnittstelle 3 die Dateninhalte aufrufbar sind. Vorliegend handelt es sich bei der Bediener-schnittstelle um ein Smartphone. Es ist jedoch auch jede andere Form von insbesondere internetfähigen Kommunikationsbedienerschnittstellen beispielsweis in Form von Personalcomputern oder Notebooks denkbar.

Dabei sei insbesondere darauf hingewiesen, dass die Aktivierung des Zugangs auf den Dateninhalt und/oder zumindest einen Datenspeicher des Cloud-Speichers 1 zeitlich vorgebbar und zeitlich begrenzt ist. Insofern werden mittels des hier beschriebenen Aktivierungselementes 2 die Dateninhalte des Cloud-Speichers 1 über einen vorgebbaren Zeitraum für den jeweiligen Benutzer oder die entsprechende Benutzercommunity des Aktivierungselementes 2 freigeschaltet und stehen diesen daher nur zeitlich begrenzt zur Verfügung.

Zur Freischaltung und zur Zugängigmachung des Dateninhalts auf den Cloud-Speicher 1 umfasst das Aktivierungselement 2 einen Aktivierungscode 21, welcher vorliegend in Form einer Buchstaben- und/oder Zahlenfolge auf das Aktivierungselement 2, das im Beispiel der Figur 1 eine Kunststoffkarte ist, aufgedruckt ist.

Insbesondere kann es sich bei dem Aktivierungselement 2 um beispielsweise ein Give-Away bei Werbeveranstaltungen oder sonstigen Konferenzen des Providers handeln. Dazu können - um einen Werbeeffekt zu erhöhen - auf Außenflächen des Aktivierungselementes 2, d.h. auf Außenflächen der Kunststoffkarte zusätzliche Werbeinhalte des Providers aufgebracht, beispielsweise aufgedruckt sein.

Nachdem ein Benutzer des Aktivierungselementes 2 den Aktivierungscode in die Bedienerschnittstelle 3 beispielsweise eingegeben hat oder von der Bedienerschnittstelle 3 eingelesen wurde, werden durch einen Sicherungsmechanismus, insbesondere durch ein verschlüsseltes Kommunikations- und Dekodierungssystem, die Dateninhalte und der Datenspeicher des jeweils dem Aktivierungscode 21 eindeutig, vorzugsweise eineindeutig, zugeordneten Datenspeichers auf dem Cloud-Speicher 1 freigeschaltet und steht für einen vorgebbaren Zeitraum zumindest einem Benutzer, vorzugsweise jedoch einer vorgebbaren Vielzahl an Benutzern, über einen vorgebbaren Zeitraum zur Verfügung.

Vorteilhaft können zudem die über den Aktivierungscode 21 freigeschalteten Benutzer Dateninhalte auf dem Cloud-Speicher 1 aufspielen und auf diesem abspeichern oder von diesem Dateninhalte herunterladen. Zudem ist vorstellbar, dass über den Cloud-Speicher 1 die von dem Aktivvierungselement 2 freigeschalteten Benutzer auch über ein Kommunikationsnetzwerk nicht nur mit dem Cloud-Speicher 1 sondern auch untereinander beispielsweise indirekt über einen Kommunikationsserver miteinander kommunizieren können.

Zur Kenntlichmachung der Provider-Informationen und für ein Provider-Branding und um insbesondere ganz besonders einfach einen Zugang zu dem Cloud-Speicher 1 zu erhalten, umfasst das Speicherkommunikationssystem 100 zudem zumindest ein Websiteanzeigenelement 4, welches in Internetkommunikation mit dem Cloud-Speicher1 steht und von der Bedienerschnittstelle 3 umfasst ist oder zumindest mit diesem in Internetkommunikation steht.

Dabei ist das Websiteanzeigeelement 4 dazu in der Lage und dafür ausgestaltet, Providerinformationen, insbesondere beispielsweise eine Werbeheadlinemechanik, beispielsweise eine Einloggmaske zum Einloggen und Eingeben des Aktivierungscodes 21 in die Bedienerschnittstelle 2 graphisch darzustellen. Insofern kommt der jeweilige Benutzer während des Benutzens des Websiteanzeigeelementes 4 und insbesondere während des Benutzens des Datenspeichers des Cloud-Speichers 1 ständig in Berührung mit Informationen des Providers.

Die Erfindung ist nicht durch die Beschreibung anhand des Ausführungsbeispiels beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in den Ausführungsbeispielen angegeben ist.

### Bezugszeichenliste

- GU I: Benutzer-Interface
- 1: Cloud-Speicher
- 2: Aktivierungselement
- 3: Bedienerschnittstelle
- 21: Aktivierungscode
- 4: Websiteanzeigenelement
- 100: Speicherkommunikationssystem

## Patentansprüche

1. Speicherkommunikationssystem (100) zum Speichern und/oder Steuern und/oder Abrufen von zumindest einem auf zumindest einem Cloud-Speicher (1) hinterlegten oder einzuspeichernden Dateninhalt, wobei der Dateninhalt zumindest teilweise Providerinformationen umfasst,
**gekennzeichnet, durch**
zumindest ein tragbares, passives Aktivierungselement (2) zum Aktivieren eines Zugangs zu dem Dateninhalt und/oder zumindest einem Datenspeicher des Cloud-Speichers (1) über zumindest eine Bedienerschnittstelle (3), und wobei über die Bedienerschnittstelle (3) die Dateninhalte abrufbar sind.

2. Speicherkommunikationssystem (100) nach Anspruch 1,
**dadurch gekennzeichnet, dass**
die Aktivierung des Zugangs auf den Dateninhalt und/oder zumindest einen Datenspeicher des Cloud-Speichers zeitlich vorgebbar und zeitlich begrenzt ist.

3. Speicherkommunikationssystem (100) nach Anspruch 1 oder 2,
**dadurch gekennzeichnet, dass**
das Aktivierungselement (2) zumindest einen Aktivierungscode und/oder zumindest einen Aktivierungschip umfasst, der dazu eingerichtet und dazu vorgesehen ist eine internetfähige Verbindung über die Bedienerschnittstelle zu dem Cloud-Speicher (1) herzustellen und/oder freizuschalten.

4. Speicherkommunikationssystem (100) nach zumindest einem der Ansprüche 1 bis 3,
**dadurch gekennzeichnet, dass**
das Aktivierungselement (2) in Form einer Kunststoffkarte oder eines Schreibstiftes ausgestaltet ist, wobei auf zumindest einer Außenfläche der Kunststoffkarte oder des Schreibstiftes der zumindest eine Aktivierungscode und/oder Aktivierungschip angeordnet und befestigt ist.

5. Speicherkommunikationssystem (100) nach zumindest einem der Ansprüche 1 bis 4,
**dadurch gekennzeichnet, dass**
nach Aktivierung des Zugangs auf den Dateninhalt und/oder zumindest einen Datenspeicher des Cloud-Speichers (1) zumindest zwei Bedienerschnittstellen in den selben Zugang einwählbar, wobei die beiden Bedienerschnittellen zeitgleich oder zeitversetzt zueinander Zugriff auf den Dateninhalt und/ oder auf zumindest einen Datenspeicher des Cloud-Speichers haben.

6. Speicherkommunikationssystem (100) nach zumindest einem der vorhergehenden Ansprüchen,
**dadurch gekennzeichnet, dass**
über ein Kommunikationsnetzwerk die Dateninhalte und/oder zumindest einen Datenspeicher des Cloud-Speichers (1) zwischen zumindest zwei Bedienerschnittstellen (3) transportierbar sind.

7. Speicherkommunikationssystem (100) nach zumindest einem der vorhergehenden Ansprüchen,
**dadurch gekennzeichnet, dass**
der Cloud-Speicher (1) ein operatives Untersystem und ein Datenauswertungs-Untersystem umfasst, wobei das operative Untersystem operative Daten gespeichert hält, und wobei das Datenauswertungs-Untersystem Transaktions(einzel)daten gespeichert hält.

8. Speicherkommunikationssystem (100) nach zumindest einem der vorhergehenden Ansprüche,
**gekennzeichnet, durch**
zumindest ein Webseitenanzeigeelement (4), welches in Internet-Kommunikation mit dem Cloud-Speicher (1) steht und von der Bedienerschnittstelle (3) umfasst ist oder zumindest mit diesem in Internetkommunikation steht, wobei über das Webseitenanzeigeelement (4) kontinuierlich oder in zeitlich vorgebbaren Zeitintervallen die Providerinformationen abgefragt und dargestellt werden können.

9. Verfahren zum Betreiben eines Speicherkommunikationssystems (100) zum Speichern und/oder steuern und/oder Abrufen von zumindest einem auf zumindest einem Cloud-Speicher (1) hinterlegten oder einzuspeichernden Dateninhalt, wobei der Dateninhalt zumindest teilweise Providerinformationen umfasst
**gekennzeichnet, durch**
zumindest ein tragbares, passives Aktivierungselement (2) zum Aktivieren eines Zugangs auf Dateninhalte und/oder zumindest einen Datenspeicher des Cloud-Speichers (1) über zumindest eine Bedienerschnittstelle (2), und wobei über die Bedienerschnittstelle (2) die Dateninhalte abgerufen werden.

## Geänderte Patentansprüche

### Geänderte Patentansprüche gemäss Regel 137(2) EPÜ.

1. Speicherkommunikationssystem (100) zum Speichern und/oder Steuern und/oder Abrufen von zumindest einem auf zumindest einem Cloud-Speicher (1) hinterlegten oder einzuspeichernden Dateninhalt, wobei der Dateninhalt zumindest teilweise Providerinformationen umfasst,
**gekennzeichnet, durch**
zumindest ein tragbares, passives Aktivierungselement (2) zum Aktivieren eines Zugangs zu dem Dateninhalt und/oder zumindest einem Datenspeicher des Cloud-Speichers (1) über zumindest eine Bedienerschnittstelle (3), wobei über die Bedienerschnittstelle (3) die Dateninhalte abrufbar sind, und wobei bei dem Cloud-Speicher (1) nur ein eingeschränkter Zugang zu einer vorgebbaren Benutzer-Community ermöglicht ist.

2. Speicherkommunikationssystem (100) nach Anspruch 1,
**dadurch gekennzeichnet, dass**
die Aktivierung des Zugangs auf den Dateninhalt und/oder zumindest einen Datenspeicher des Cloud-Speichers zeitlich vorgebbar und zeitlich begrenzt ist.

3. Speicherkommunikationssystem (100) nach Anspruch 1 oder 2,
**dadurch gekennzeichnet, dass**
das Aktivierungselement (2) zumindest einen Aktivierungscode und/oder zumindest einen Aktivierungschip umfasst, der dazu eingerichtet und dazu vorgesehen ist eine internetfähige Verbindung über die Bedienerschnittstelle zu dem Cloud-Speicher (1) herzustellen und/oder freizuschalten.

4. Speicherkommunikationssystem (100) nach zumindest einem der Ansprüche 1 bis 3,
**dadurch gekennzeichnet, dass**
das Aktivierungselement (2) in Form einer Kunststoffkarte oder eines Schreibstiftes ausgestaltet ist, wobei auf zumindest einer Außenfläche der Kunststoffkarte oder des Schreibstiftes der zumindest eine Aktivierungscode und/oder Aktivierungschip angeordnet und befestigt ist.

5. Speicherkommunikationssystem (100) nach zumindest einem der Ansprüche 1 bis 4,
**dadurch gekennzeichnet, dass**
nach Aktivierung des Zugangs auf den Dateninhalt und/oder zumindest einen Datenspeicher des Cloud-Speichers (1) zumindest zwei Bedienerschnittstellen in den selben Zugang einwählbar, wobei die beiden Bedienerschnittellen zeitgleich oder zeitversetzt zueinander Zugriff auf den Dateninhalt und/ oder auf zumindest einen Datenspeicher des Cloud-Speichers haben.

6. Speicherkommunikationssystem (100) nach zumindest einem der vorhergehenden Ansprüchen,
**dadurch gekennzeichnet, dass**
über ein Kommunikationsnetzwerk die Dateninhalte und/oder zumindest einen Datenspeicher des Cloud-Speichers (1) zwischen zumindest zwei Bedienerschnittstellen (3) transportierbar sind.

7. Speicherkommunikationssystem (100) nach zumindest einem der vorhergehenden Ansprüchen,
**dadurch gekennzeichnet, dass**
der Cloud-Speicher (1) ein operatives Untersystem und ein Datenauswertungs-Untersystem umfasst, wobei das operative Untersystem operative Daten gespeichert hält, und wobei das Datenauswertungs-Untersystem Transaktions(einzel)daten gespeichert hält.

8. Speicherkommunikationssystem (100) nach zumindest einem der vorhergehenden Ansprüche,
**gekennzeichnet, durch**
zumindest ein Webseitenanzeigeelement (4), welches in Internet-Kommunikation mit dem Cloud-Speicher (1) steht und von der Bedienerschnittstelle (3) umfasst ist oder zumindest mit diesem in Internetkommunikation steht, wobei über das Webseitenanzeigeelement (4) kontinuierlich oder in zeitlich vorgebbaren Zeitintervallen die Providerinformationen abgefragt und dargestellt werden können.

9. Verfahren zum Betreiben eines Speicherkommunikationssystems (100) zum Speichern und/oder steuern und/oder Abrufen von zumindest einem auf zumindest einem Cloud-Speicher (1) hinterlegten oder einzuspeichernden Dateninhalt, wobei der Dateninhalt zumindest teilweise Providerinformationen umfasst
**gekennzeichnet, durch**
zumindest ein tragbares, passives Aktivierungselement (2) zum Aktivieren eines Zugangs auf Dateninhalte und/oder zumindest einen Datenspeicher des Cloud-Speichers (1) über zumindest eine Bedienerschnittstelle (2), und wobei über die Bedienerschnittstelle (2) die Dateninhalte abgerufen werden, bei dem Cloud-Speicher (1) nur ein eingeschränkter Zugang zu einer vorgebbaren Benutzer-Community ermöglicht ist.
